# EUROPÄISCHE PATENTSCHRIFT

(11) **EP 3 554 797 B1**
(45) Veröffentlichungstag und Bekanntmachung des Hinweises auf die Patenterteilung: **15.11.2023**
(21) Anmeldenummer: 18818973.2
(22) Anmeldetag: 29.11.2018
(51) Int. Cl.: B29C 64/209, B29C 64/118

(54) **DRUCKKOPF FÜR DAS SCHICHTWEISE AUFBRINGEN VON MATERIAL**
PRINTHEAD FOR THE LAYER-BY-LAYER APPLICATION OF MATERIAL
TÊTE D'IMPRESSION POUR L'APPLICATION COUCHE PAR COUCHE DE MATÉRIAU

(30) Priorität: 05.12.2017 AT 601362017; 15.03.2018 AT 702018
(43) Veröffentlichungstag der Anmeldung: 23.10.2019
(73) Patentinhaber: AM Design e.U., 1080 Wien (AT)
(72) Erfinder: SCHREINER, Konrad, 1080 Wien (AT)
(74) Vertreter: Keschmann, Marc
(86) Internationale Anmeldenummer: PCT/AT2018/000094
(87) Internationale Veröffentlichungsnummer: WO 2019/109114

(56) Entgegenhaltungen:
- WO-A1-2017/084500
- CN-A- 107 322 923
- CN-A- 107 350 472
- CN-B- 103 786 344
- CN-U- 203 764 977
- DE-A1-102015 111 504
- KR-A- 20170 015 952
- US-A1- 2015 140 153
- US-A1- 2016 031 159
- US-A1- 2017 094 726

## Beschreibung

Die Erfindung betrifft einen Extrusionskopf, insbesondere Druckkopf, für das schichtweise Aufbringen von Material zur generativen Fertigung eines Formkörpers, umfassend eine Extrusionsdüse mit einem Extrusionskanal und eine Heizeinrichtung für das Aufschmelzen des der Extrusionsdüse zugeführten Polymermaterials.

Generative Fertigungsverfahren, auch 3D-Druckverfahren genannt, zeichnen sich dadurch aus, dass der Aufbau eines Formkörpers schichtweise erfolgt. Üblicherweise wird wiederholt jeweils zeilen- oder punktweise eine Arbeitsebene abgefahren und ortsselektiv Material ausgebracht und die Arbeitsebene danach nach oben verschoben. Die Schichtdicken liegen je nach Anwendungsfall zwischen 0,025 und 1,25 mm oder darüber. Grundlage für 3D-Druckverfahren sind Computermodelle des zu fertigenden Objekts, welche beispielsweise unter Zuhilfenahme einer CAD-Software generiert werden können. Dabei wird ein Höhenschichtplan des zu fertigenden Objekts hergestellt, bei dem für jede Schicht ein Fertigungsraster erzeugt wird, welcher definiert, an welchen Zellen des Rasters ortselektiv Fertigungsmaterial abgelegt und verfestigt werden soll.

Die Dokumente KR 2017 0015952A, US 2016/0311159 A1, CN 103 786 344 B, CN 203 764 977 U, DE 10 2015 111504 A1, CN 107 322 923 A, WO 2017/084500 A1, US 2017/094726 A1 sowie US 2015/140153 A1 bilden den technischen Hintergrund zum Gegenstand der vorliegenden Erfindung.

Das Dokument CN 107 350 472 A zeigt ein Ultraschall-3D-Drucksystem, dadurch gekennzeichnet, dass eine Hochfrequenz-Induktionsfusions-3D-Druckvorrichtung und eine Ultraschall-Rollvorrichtung mit einer beweglichen Vorrichtung verbunden sind.

Die Erfindung bezieht sich vorzugsweise auf ein 3D-Druckverfahren, das als Fused Deposition Modeling (FDM) oder Fused Filament Fabrication (FFF) bezeichnet wird, bei dem ein Formkörper aus einem schmelzfähigen Kunststoff schichtweise aufgebaut wird. Zu diesem Zweck erfolgt zunächst eine Verflüssigung eines meist drahtförmig von einem Materialvorrat zugeführten Kunststoff- oder Wachsmaterials (Filament) durch Erwärmung sowie nachfolgend die Aufbringung des verflüssigten Materials durch Extrudieren mittels einer Düse und abschließend eine Erhärtung des Materials durch Abkühlung an der gewünschten Position der Arbeitsebene. Die Materialausbringung kann strangförmig oder punktförmig erfolgen.

Für das FDM-Verfahren können derzeit Formwachse und Thermoplaste, wie z.B. Polyethylen, Polypropylen, Polylactid, ABS, PETG und thermoplastische Elastomere eingesetzt werden.

Die Erwärmung und das Extrudieren des Filamentmaterials erfolgt in der Regel mittels eines Druckkopfes, welcher auch als "HotEnd" bezeichnet wird. Das Filament wird bei herkömmlichen FDM-Verfahren durch eine beheizte Kammer des Druckkopfes gefördert und dort aufgeschmolzen. Das schmelzflüssige Material wird durch die Düse des Druckkopfes mit definiertem Querschnitt gedrückt. Die Einhaltung exakter Temperaturverhältnisse im Inneren des Druckkopfs ist hierbei von großer Wichtigkeit. So muss an dem der Extrusionsdüse zugewandten Ende der beheizten Kammer die Temperatur hoch genug sein, um das Filamentmaterial in den schmelzflüssigen Zustand zu überführen. Über die Extrusionsdüse, die mit der Kammer fest verbunden bzw. verschraubt ist, gelangt die Schmelze ins Freie und wird auf einer Bauplattform abgelegt. An der Materialeintrittsseite der beheizten Kammer hingegen darf die Temperatur nicht zu hoch sein, da hier das noch feste Filament nachgeschoben wird. Erst das Nachschieben von Filament am Kammereingang führt zum Herausdrücken von aufgeschmolzenem Material an der Extrusionsdüse. Ist die Temperatur am Kammereingang zu hoch, erweicht das Filament und aufgrund der fehlenden Festigkeit kann es nicht nachgeschoben werden. Ein 3D-Druck nach dem FDM Verfahren kann auch versagen, wenn die Temperatur am Düsenende zu niedrig ist und das Material unzureichend aufgeschmolzen ist. Die Düse ist dann durch nicht aufgeschmolzenes Material blockiert. Dies ist gerade bei höheren Materialdurchsätzen ein häufiges Problem.

Die vorliegende Erfindung, wie sie im Anspruch 1 offenbart ist, zielt daher darauf ab, einen Extrusionskopf, insbesondere Druckkopf für einen 3D-Drucker, dahingehend weiterzubilden, dass die Einhaltung vordefinierter Temperaturverhältnisse im Extrusionskopf vereinfacht werden und eine Anpassung der einzuhaltenden Temperaturverhältnisse an wechselndes Filamentmaterial ermöglicht werden kann.

Zur Lösung dieser Aufgabe sieht die Erfindung bei einer Vorrichtung der eingangs genannten Art in Wesentlichen vor, dass die Heizeinrichtung als induktive Heizung ausgebildet ist, welche einen die Extrusionsdüse umgebenden Induktor umfasst, wobei die Extrusionsdüse zumindest teilweise aus einem induktiv erwärmbaren Material besteht.

Dadurch, dass das Aufschmelzen des Materials mit Hilfe einer induktiven Heizung erfolgt, wird die Regelung der Heizleistung wesentlich vereinfacht, wobei das Aufschmelzen direkt in der Extrusionsdüse erfolgt, sodass auf eine gesonderte, der Extrusionsdüse vorgeordnete Heizzone oder Heizkammer verzichtet werden kann, sodass die mit der vorgeordneten Heizzone bzw. -kammer verbundenen Probleme entfallen. Ein weiterer Vorteil der induktiven Beheizung liegt in der berührungslosen Energieübertragung vom Induktor auf das induktiv erwärmbare Material der Extrusionsdüse, sodass der Düsenkörper, wenn dieser nicht vollständig aus dem induktiv erwärmbaren Material besteht, zur mechanischen Fixierung, zur thermischen Isolation bzw. zur Wärmeableitung genutzt werden kann.

Zur Verbesserung der Wärmeableitung ist es erfindungsgemäß vorgesehen, dass die Extrusionsdüse für eine thermische und ggf. elektrische Isolation in einem diese umgebenden Isolationskörper gehalten ist, der vorzugsweise aus einem keramischen Material besteht.

Der Isolationskörper kann einen ringförmigen Querschnitt aufweisen und ggf. mit axialen Durchbrechungen versehen sein, um die für eine Wärmeableitung zur Verfügung stehende Oberfläche zu vergrößern, die mitunter auch durch geförderte Luft zwangsangeströmt wird. Darüber hinaus ist durch ebendiese Durchbrechungen die Zuführung von Kühlluft an die im 3D Druck relevanten Stellen, vorrangig an die Druckspitze, ermöglicht.

In erfindungsgemäßer Weise ist der Induktor, wie z.B. wenigstens eine Induktionsspule, im oder am Isolationskörper angeordnet. Die wenigstens eine Induktionsspule kann vorzugsweise den Isolationskörper umgebend angeordnet, insbesondere um diesen gewickelt sein. Der Induktor kann auch eine Mehrzahl von Spulenelementen umfassen, die z.B. mit Hilfe eines 3D-Druckverfahrens in den Isolationskörper eingebettet oder auf diesem aufgebracht sind. Dies ist insbesondere für den Fall vorteilhaft, dass der bevorzugt aus einem keramischen Material bestehende Isolationskörper durch ein generatives Fertigungsverfahren hergestellt ist. Durch das generative Fertigungsverfahren ist darüber hinaus auch möglich, die Durchbrechungen als gezielt angelegte Kühlkanäle zu konzipieren.

Für die Zuführung des Filaments zu der Extrusionsdüse ist erfindungsgemäß ein Materialzuführkörper vorgesehen, der einen mit dem Extrusionskanal der Extrusionsdüse fluchtenden Zuführkanal aufweist. Der Materialzuführkörper ist hierbei nicht direkt beheizt. Der Zuführkanal dient nicht der Extrusion, sondern lediglich der Zuführung des Filaments zur Extrusionsdüse, sodass der Zuführkanal bevorzugt zylindrisch ausgebildet sein kann. Der Extrusionskanal der Extrusionsdüse hingegen ist vorzugsweise mit einem sich in Materialaustrittsrichtung verringernden Querschnitt ausgebildet. Der Extrusionskanal kann beispielsweise sich konisch verjüngend ausgebildet sein, wobei bevorzugt eine stetige Querschnittsverengung vorgesehen ist.

Aus unterschiedlichen Filamentmaterialien ergeben sich unterschiedliche Anforderungen an die Extrusionsdüse, insbesondere an die Geometrie des Extrusionskanals und an die Einstellung der Temperaturverhältnisse in der Extrusionsdüse. Filamentmaterialien unterscheiden sich insbesondere in ihrem Schmelzverhalten. Die Extrusionsdüse ist daher bevorzugt an das jeweilige Extrusionsmaterial angepasst. Der dem Material innewohnende Wärmeleitkoeffizient bestimmt, bis zu welchem Ausmaß die Temperatur von der erhitzten inneren Flanke der Extrusionsdüse weitergegeben werden darf. Die Geometrie soll speziell auf die Materialeigenschaften des zur Verarbeitung bestimmten Extrusionsmaterials abgestimmt sein. Dadurch wird der Extrusionsprozess maßgeblich verbessert. Die Verarbeitung wird deutlich kraftärmer, sodass z.B. die Kraft für den Vorschub des Extrusionsmaterials abnimmt und die in das System eingebrachte Energie reduziert werden kann. Durch die geringe Dauer der Verarbeitung wird der Abbau der Polymerketten reduziert und insgesamt ein hochwertigeres Material extrudiert.

Eine einfache Anpassung der Extrusionsdüse an das jeweilige Extrusionsmaterial gelingt erfindungsgemäß dadurch, dass die Extrusionsdüse lösbar mit dem Materialzuführkörper verbunden ist, wobei die Extrusionsdüse unter Vermittlung des Isolationskörpers mit dem Materialzuführkörper verbunden ist. Dadurch kann eine Mehrzahl von Extrusionsdüsen mit unterschiedlichen Eigenschaften, z.B. mit unterschiedlicher Geometrie des Extrusionskanals, vorrätig gehalten werden und bei einem Materialwechsel kann auch die Extrusionsdüse ausgetauscht werden. Die lösbare Verbindung der Extrusionsdüse erfolgt bevorzugt mit Hilfe einer Gewindeverbindung. Die Extrusionsdüse kann hierbei direkt an den Materialzuführkörper angeschraubt sein.

Eine bevorzugte Möglichkeit, um die Geometrie und/oder die Beheizung und/oder die Gleiteigenschaften und/oder die Verschleißeigenschaften des Extrusionskanals zu beeinflussen, liegt darin, dass die Kanalwand des Extrusionskanals der Extrusionsdüse von wenigstens einer Materialschicht aus einem vom Material des Düsenkörpers der Extrusionsdüse verschiedenen Material gebildet ist. Die Materialschicht ist dabei so angeordnet, dass sie mit dem durch den Extrusionskanal gedrückten Extrusionsmaterial in Berührung steht. Im Falle eines mehrschichtigen Aufbaus mit zwei oder mehreren Materialschichten ist vorgesehen, dass nur die innerste Schicht mit dem durch den Extrusionskanal gedrückten Extrusionsmaterial in Berührung steht.

Mit Vorteil ist die wenigstens eine Materialschicht als Hülse ausgebildet, welche in dem Düsenkörper aufgenommen ist und den Extrusionskanal begrenzt. Dadurch wird die Herstellung der Hülse in einem vom Düsenkörper gesonderten Herstellungsschritt ermöglicht, wobei der Düsenkörper z.B. als Körper mit einer gleichbleibenden Geometrie hergestellt wird und die Anpassung der Extrusionskanalgeometrie lediglich durch die Ausgestaltung der Hülse erfolgt. Alternativ kann die Materialschicht durch ein Beschichtungsverfahren aufgebracht werden.

Alternativ kann die Hülse selbst als Extrusionsdüse ausgebildet sein, d.h. ein Düsenkörper als Träger der Hülse kann entfallen. Die als Extrusionsdüse ausgebildete Hülse kann mehrschichtig aufgebaut sein.

Das Material der wenigstens einen Materialschicht kann in Abhängigkeit von der gewünschten Funktion ausgewählt werden. Gemäß einer bevorzugten Ausbildung besteht die Materialschicht aus dem induktiv erwärmbaren Material, sodass die Wärmeenergie direkt an der Kanalwand des Extrusionskanals entsteht.

Alternativ kann der Düsenkörper aus dem induktiv erwärmbaren Material bestehen und eine Beschichtung besteht aus einem nicht induktiv erwärmbaren Material.

Weiters kann vorgesehen sein, dass die Materialschicht aus einem keramischen Material oder aus polykristallinem Diamant besteht. Dadurch kann die Verschleißbeständigkeit des Extrusionskanals wesentlich erhöht werden.

Folgende Ausbildungen der Extrusionsdüse können voreilhaft sein:
Der Düsenkörper besteht aus einem induktiv erwärmbaren Material und weist an der Innenseite eine konische Geometrie auf, in die eine Hülse mit einer für die Filamentmaterialschmelze optimierten Geometrie des Extrusionskanals eingesetzt ist.

Alternativ kann der Düsenkörper aus einem Material bestehen, das nicht induktiv erwärmbar ist, aber eine auf die Kunststoffschmelze, insbesondere Filamentmaterialschmelze, optimierte Geometrie an der Innenseite bereithält, auf welcher eine Schicht eines induktiv erwärmbaren Materials angeordnet ist. Bevorzugt ist die Schicht des induktiv erwärmbaren Materials mittels eines Beschichtungsverfahrens aufgebracht.

Alternativ besteht der Düsenkörper aus einem induktiv erwärmbaren Material und stellt an der Innenseite eine auf die Filamentmaterialschmelze optimierte Geometrie zur Verfügung, auf die mittels eines Beschichtungsverfahrens eine nicht induktiv erwärmbare Oberfläche aufgebracht ist.

Alternativ wird die Kanalwand des Extrusionskanals von einer Hülse gebildet, die aus einem nicht induktiv erwärmbaren Material besteht und an der Innenseite eine auf die Filamentmaterialschmelze optimierte Geometrie bereitstellt. An der Außenseite wird bevorzugt mittels eines Beschichtungsverfahrens oder eines Tiefziehverfahrens eine induktiv erwärmbare Oberfläche aufgebracht.

Alternativ wird die Kanalwand des Extrusionskanals von einer Hülse gebildet, die aus einem nicht induktiv erwärmbaren Material besteht und an der Innenseite eine auf die Filamentmaterialschmelze optimierte Geometrie bereitstellt. An der Außenseite ist die Hülse konusförmig ausgebildet, wobei der Konus dazu genutzt wird, die Hülse mit einem Düsenkörper aus einem induktiv erwärmbaren Material zu verbinden.

Die Erfindung betrifft gemäß einem weiteren Aspekt ein modulares System für das schichtweise Aufbringen von Material zur generativen Fertigung eines Formkörpers, umfassend einen erfindungsgemäßen Extrusionskopf, insbesondere Druckkopf, der eine auswechselbare erste Extrusionsdüse aufweist, und weiters umfassend wenigstens eine zweite Extrusionsdüse, wobei die erste und die zweite Extrusionsdüse jeweils einen Extrusionskanal aufweisen, der einen sich in Austrittsrichtung des Materials verjüngenden Querschnitt aufweist, wobei der Extrusionskanal der ersten und der zweiten Extrusionsdüse eine voneinander verschiedene Geometrie aufweist.

Gemäß einem weiteren Aspekt betrifft die Erfindung eine Vorrichtung zur generativen Fertigung eines Formkörpers umfassend eine Bauplattform, wenigstens einen erfindungsgemäßen Extrusionskopf, insbesondere Druckkopf oder ein erfindungsgemäßes modulares System zum schichtweisen Aufbringen von Material auf die Bauplattform oder den auf der Bauplattform zumindest teilweise aufgebauten Formkörper, einen positionierbaren Träger für den wenigstens einen Extrusionskopf, ein Positioniersystem für den Träger und eine Zuführeinrichtung zum Zuführen von Material aus einem Materialvorrat zu dem wenigstens einen Extrusionskopf.

Vorzugsweise ist die Bauplattform starr oder lediglich höhenverstellbar ausgebildet und der bevorzugt in einem Träger auswechselbar aufgenommene Extrusionskopf, insbesondere Druckkopf, ist mit Hilfe eines Positioniersystems zweidimensional in einer Ebene oder dreidimensional im Raum positionierbar bzw. verfahrbar. Beim Positioniersystem unterscheidet man zwischen einem kartesischen System und einem sog. "Delta"-System. Beim kartesischen Prinzip erfolgt die Positionierung des Trägers mit Hilfe von drei angetriebenen Linearachsen, die den dreidimensionalen Bauraum mit den Koordinatenachsen x, y und z aufspannen. Der Delta-Drucker nutzt das Prinzip der Parallelogramm-Kinematik und kann so programmiert werden, dass der den Druckkopf aufnehmende Träger verfahrbar ist. Eine dreidimensionale Positionierung wird hier durch das Verfahren von drei angetriebenen, ein Dreieck aufspannenden Achsen in vertikaler Richtung realisiert, welche den Träger halten.

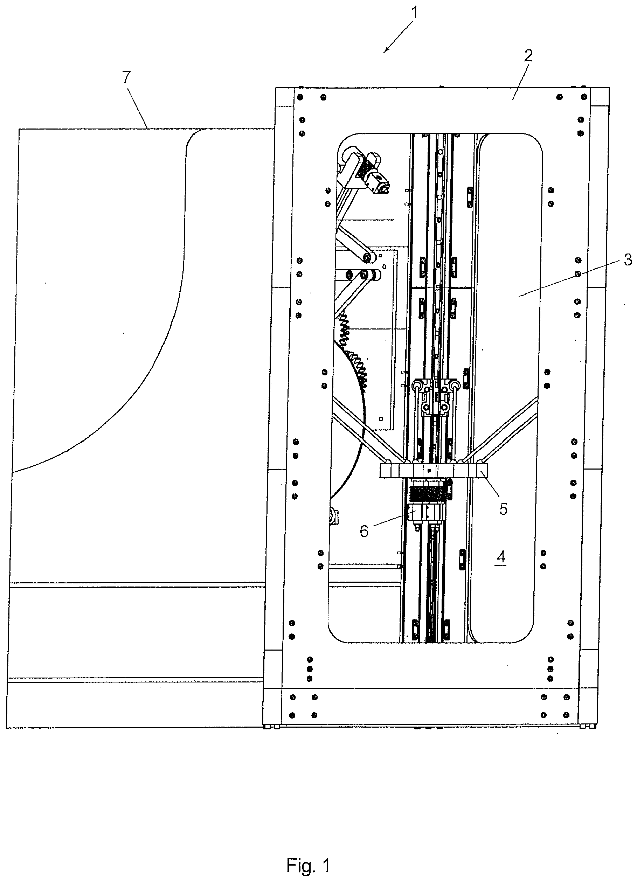

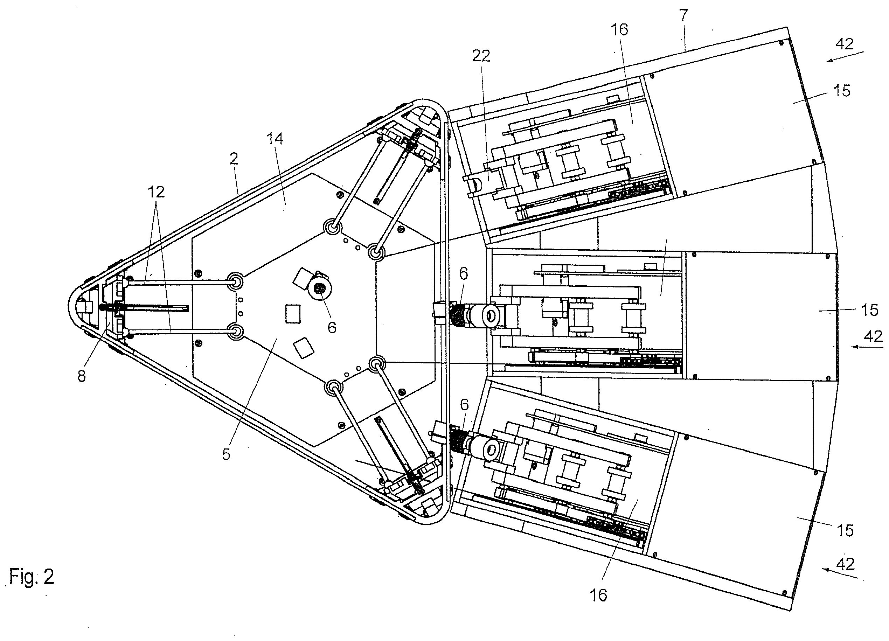

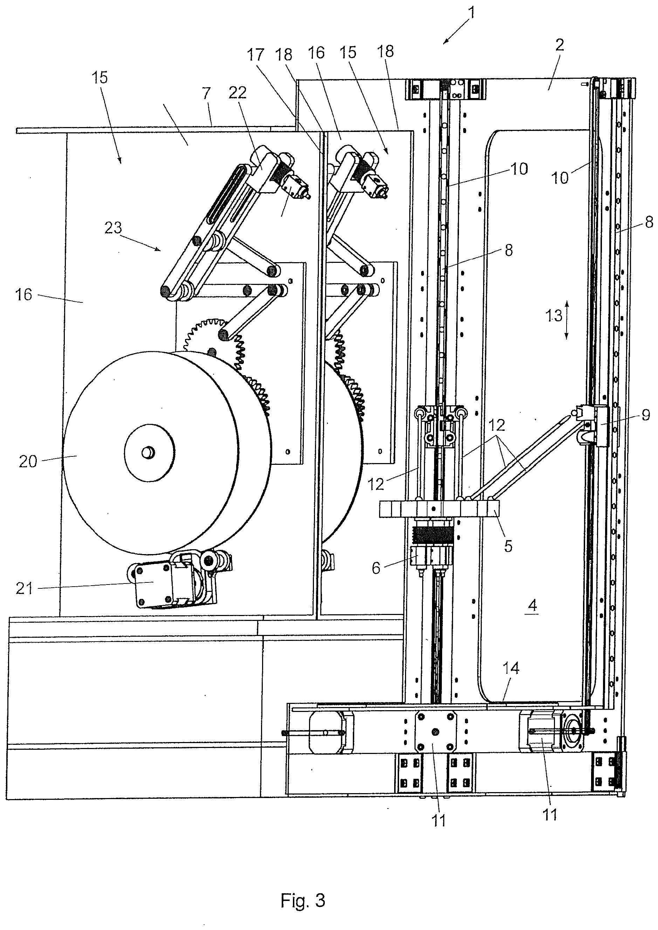

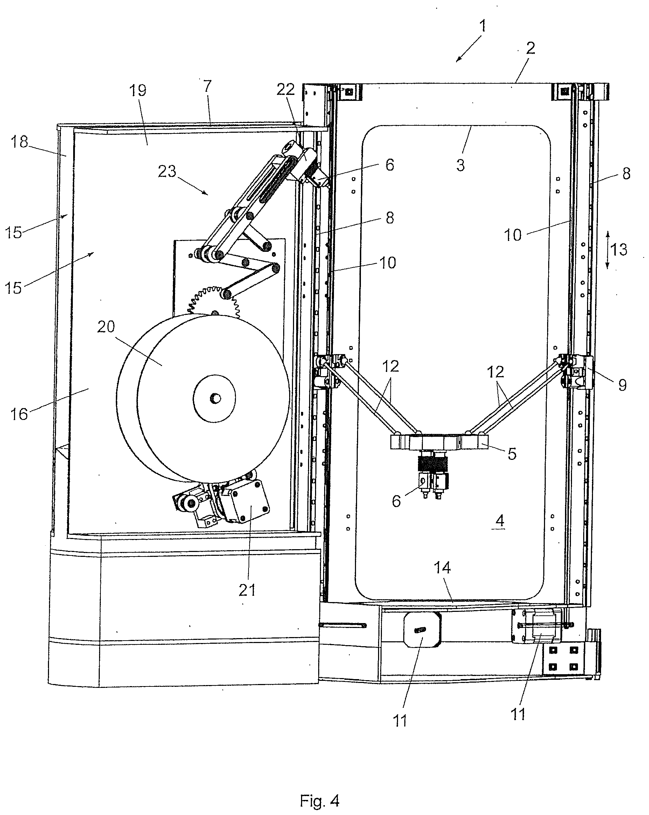

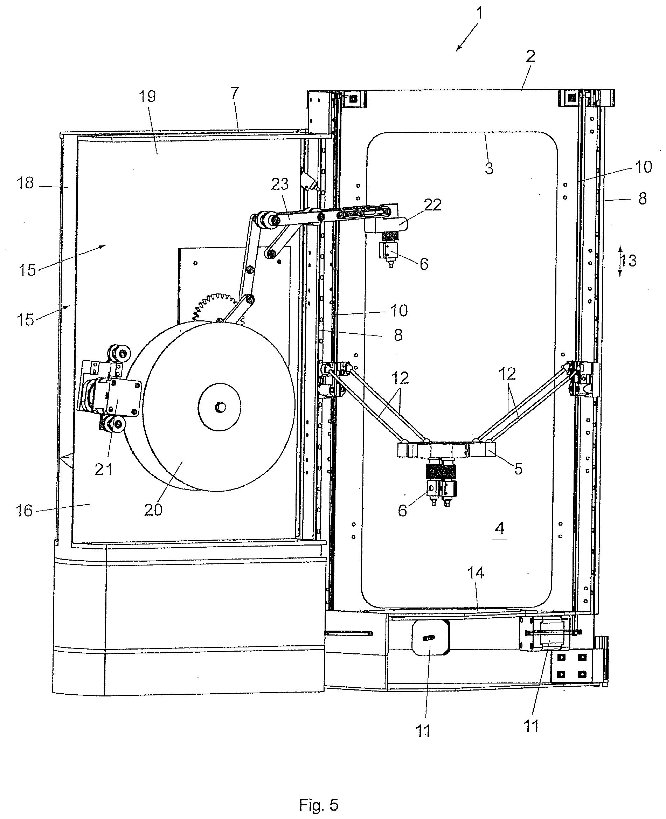

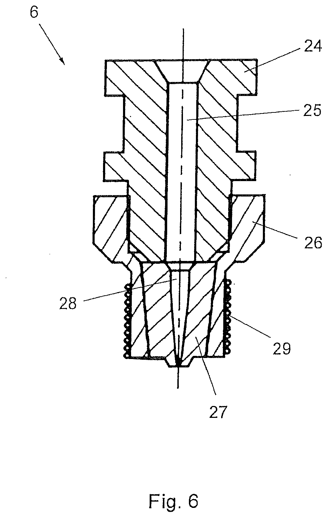

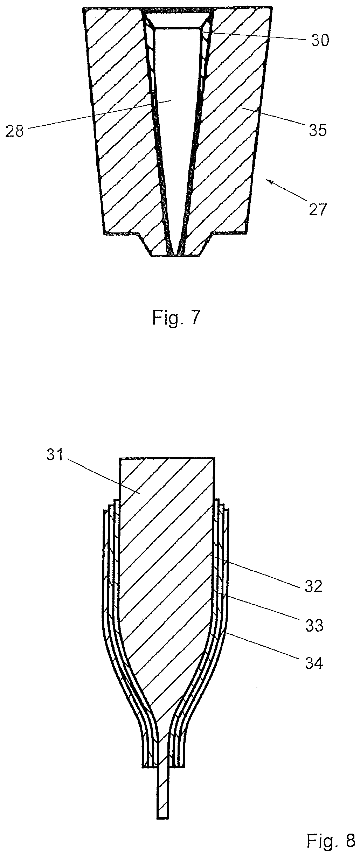

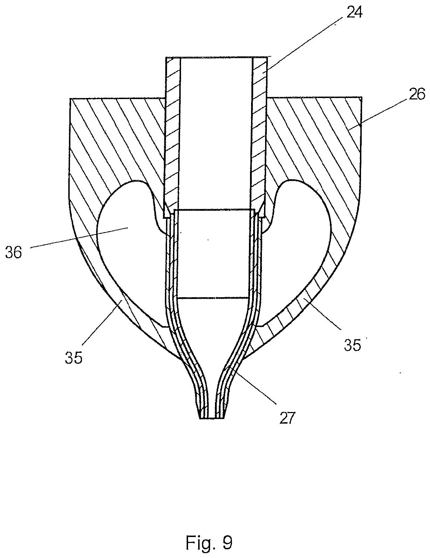

Die Erfindung wird nachfolgend anhand von in der Zeichnung schematisch dargestellten Ausführungsbeispielen näher erläutert. In dieser zeigen Fig. 1 eine Außenansicht eines 3D-Druckers, Fig. 2 einen Grundriss des 3D-Druckers gemäß Fig. 1, Fig. 3 eine erste Innenansicht des 3D-Druckers, Fig. 4 eine zweite Innenansicht des 3D-Drucker, Fig. 5 eine Ansicht gemäß Fig. 4 mit in den Druckraum eingebachtem Druckkopf, Fig. 6 einen erfindungsgemäßen Druckkopf in einer Schnittansicht, Fig. 7 die Extrusionsdüse des Druckkopfs gemäß Fig. 6, Fig. 8 die Herstellung einer Hülse zur Ausbildung des Extrusionskanals einer Extrusionsdüse und Fig. 9 eine abgewandelte Ausbildung des Druckkopfs.

In Fig. 1 ist ein 3D-Drucker 1 dargestellt. Der 3D-Drucker weist ein Hauptgehäuse 2 auf, das an wenigstens einer Seitenfläche mit einem Sichtfenster 3 versehen ist, welches einen Einblick in den Bauraum 4 des 3D-Druckers 1 freigibt. Im Bauraum 4 des 3D-Druckers 1 ist ein Träger 5 mithilfe eines Positionierungssystems dreidimensional positionierbar gehalten. Der Träger 5 trägt Druckköpfe 6, welche zum Ausbringen eines Fertigungsmaterials ausgebildet sind.

Der 3D-Drucker 1 umfasst weiters ein seitlich am Hauptgehäuse 2 angeordnetes Zusatzgehäuse 7, welches wenigstens einen, bevorzugt drei Aufnahme- bzw. Einschubplätze für auswechselbare Einsätze aufweist.

Im Grundriss gemäß Fig. 2 ist ersichtlich, dass das Hauptgehäuse 2 einen dreieckigen Grundriss aufweist, wobei das Zusatzgehäuse 7 seitlich des Hauptgehäuses 2 angeordnet ist und drei Aufnahme- bzw. Einschubplätze 15 für auswechselbare Einsätze 16 aufweist. Der jeweilige auswechselbar Einsatz 16 kann in Richtung des Pfeils 42 in den jeweiligen Aufnahme- bzw. Einschubplatz 15 eingesetzt bzw. eingeschoben werden.

In der Innenansicht gemäß Fig. 3 ist nun das Positionierungssystem für den Träger 5 näher dargestellt. Das Positionierungssystem umfasst drei vertikale Führungen, wie z.B. Führungsstangen 8, von denen in Fig. 3 zwei Führungsstangen 8 ersichtlich sind. An den Führungsstangen 8 ist jeweils ein Schlitten 9 in vertikaler Richtung verfahrbar angeordnet, wobei der Fahrantrieb einen schematisch angedeuteten Zahnriemen 10 umfasst, der jeweils von einem Schrittmotor 11 angetrieben wird. Der Träger 5 ist mithilfe von beidseitig gelenkig angebrachten Haltestangen 12 an den Schlitten 9 befestigt. Die Schlitten 9 sind unabhängig voneinander in Richtung des Pfeils 13 verstellbar, wodurch eine dreidimensionale Positionierung des Trägers 5 im Bauraum 4 ermöglicht wird. Im Inneren des Bauraums 4 befindet sich eine Bauplattform 14, auf welcher der auszubildende Formkörper durch Materialausbringung aus den Druckköpfen 6 schichtweise aufgebaut wird.

In Fig. 3 ist weiters ersichtlich, dass das seitlich angebrachte Zusatzgehäuse 7 zwei Einschubplätze 15 aufweist, welche jeweils einen auswechselbaren Einsatz 16 aufnehmen. Die auswechselbaren Einsätze 16 sind zum Bauraum 4 hin offen, sodass der Träger 5 von den auswechselbaren Einsätzen 16 mit Druckköpfen beschickt werden kann. Die auswechselbaren Einsätze 16 weisen jeweils ein Gehäuse auf, wobei bei dem in Fig. 3 weiter hinten angeordneten auswechselbaren Einsatz 16 eine hintere und eine vordere Gehäusewand 18 ersichtlich sind. Bei dem in Fig. 3 weiter vorne angeordneten auswechselbaren Einsatz 16 ist lediglich die hintere Gehäusewand 19 ersichtlich. Die vordere Gehäusewand ist der Übersichtlichkeit halber nicht gezeichnet, damit die in dem auswechselbaren Einsatz 16 aufgenommenen Komponenten besser ersichtlich sind. Zwischen den Gehäusen der auswechselbaren Einsätze 16 kann ggf. eine Trennwand 17 vorgesehen sein, welche die beiden Einschubplätze 15 voneinander trennt.

Die auswechselbaren Einsätze 16 enthalten eine Materialaufnahme in Form einer Materialrolle 20, welche ein spulenartig aufgewickeltes, strangförmiges Material (Filament) aufweist. Der Materialrolle 20 ist eine Vorschubeinrichtung 21 zugeordnet, welche ausgebildet ist, um das Filament von der Rolle 20 abzuziehen und dem Druckkopf 6 zuzuführen. Der Druckkopf 6 ist in einer Halteeinrichtung 22 gehalten, welche auf einem aus mehreren Segmenten bestehenden Arm 23 befestigt ist.

Fig. 4 zeigt denselben 3D-Drucker wie Fig. 3 in einer Innenansicht, wobei eine von Fig. 3 verschiedene Perspektive gezeigt ist.

Während der in der Halteeinrichtung 22 gehaltene Druckkopf 6 in Fig. 4 in einer Aufbewahrungsposition, d.h. im auswechselbaren Einsatz 16 angeordnet ist, wurde dieser bei der Darstellung gemäß Fig. 5 in die in den Bauraum 4 vorragende Übergabeposition verlagert. Die Verlagerung erfolgt hierbei durch das Ausschwenken des Arms 23, an dem die Haltevorrichtung 22 befestigt ist. Die in Fig. 5 dargestellte Übergabeposition des Druckkopfs 6 ermöglicht eine Übergabe des Druckkopfs 6 von der Halteeinrichtung 22 in eine Druckkopfaufnahme des Trägers 5. Der Träger 5 kann zu diesem Zweck so an den in der Halteeinrichtung 22 gehaltenen Druckkopf 6 herangefahren werden, dass der Druckkopf 6 in die Druckkopfaufnahme des Trägers 5 eingeführt wird. Die Halteeinrichtung 22 ist so ausgebildet, dass sie auch in der Lage ist, einen in den Träger 5 aufgenommenen Druckkopf nach Beendigung der vorgesehenen Fertigungsschritte zu entnehmen und von der Übergabeposition wieder zurück in die in Fig. 4 dargestellte Aufbewahrungsposition zu bewegen.

In Fig. 6 ist ein Druckkopf 6 in einer Schnittansicht dargestellt, wobei der Druckkopf in einer Vorrichtung gemäß den Fig. 1-5 oder in einem anders aufgebauten 3D-Drucker zum Einsatz gelangen kann. Der Druckkopf umfasst einen Materialzuführkörper 24 mit einem Zuführkanal 25. Im unteren Bereich des Materialzuführkörpers 24 ist ein Außengewinde ausgebildet, auf welches ein Isolationskörper 26 aufgeschraubt werden kann, welcher wiederum eine Extrusionsdüse 27 trägt, welche einen Extrusionskanal 28 aufweist, der mit dem Zuführkanal 25 fluchtet. Den Isolationskörper 26 umgebend ist eine Induktionsspule 29 vorgesehen, welche zur induktiven Erwärmung eines induktiv erwärmbaren Materials der Extrusionsdüse 27 ausgebildet ist. Die Extrusionsdüse 27 ist mittels einer Schraubverbindung mit dem Isolationskörper 26 verbunden.

In Fig. 7 ist die Extrusionsdüse 27 des in Fig. 6 dargestellten Druckkopfes 6 näher ersichtlich. Die Extrusionsdüse 27 umfasst einen Düsenkörper 35 und eine oder mehrere den Extrusionskanal 28 begrenzende Materialschicht oder Materialschichten 30, welche z.B. als gesondert hergestellte Hülse ausgebildet sein kann oder mit Hilfe eines Beschichtungsverfahrens auf die Innenseite des Düsenkörpers aufgebracht wurde.

In Fig. 8 ist ein bevorzugtes Herstellungsverfahren zur Herstellung einer den Düsenkanal 28 begrenzenden Hülse dargestellt, wobei die Hülse aus drei Schichten 32, 33 und 34 besteht, die aus voneinander verschiedenen Materialien ausgebildet sind. Es wird ein temporärer Träger 31 bereitgestellt, der zuerst mit der Schicht 32 versehen wird. Danach wird die Schicht 33 über die Schicht 32 aufgebracht und abschließend die Schicht 34 über die Schicht 33 aufgebracht. Nach dem Entfernen des Trägers 31 steht eine dreischichtige Hülse zur Verfügung, die in einem Düsenkörper aufgenommen werden kann. Der Träger 31 kann sowohl eine wiederverwendbare Form sein als auch eine im Herstellungsprozess zerstörbare Form.

Bei der Ausbildung gemäß Fig. 9 wird eine Hülse, wie z.B. die Hülse gemäß Fig. 8, unmittelbar als Extrusionsdüse verwendet. Die Extrusionsdüse 27 wird von dem Isolationskörper 26 gehalten bzw. eingefasst, der fingerartige Haltelemente 35 umfasst, die an dem verjüngten Vorderbereich der Extrusionsdüse 27 angreifen. Zwischen den fingerartigen Halteelementen 35 bleiben Öffnungen frei, über welche ein Hohlraum 36 des Isolationskörpers 26 mit der Umgebung in Verbindung steht. Der Isolationskörper 26 ist am Außenmantel des Materialzuführkörpers 24 gehalten.

## Patentansprüche

1. Extrusionskopf, insbesondere Druckkopf (6), für das schichtweise Aufbringen von Material zur generativen Fertigung eines Formkörpers, umfassend eine Extrusionsdüse (27) mit einem Extrusionskanal (28) und eine Heizeinrichtung für das Aufschmelzen des der Extrusionsdüse (27) zugeführten Polymermaterials, wobei die Heizeinrichtung als induktive Heizung ausgebildet ist, welche einen die Extrusionsdüse (27) umgebenden Induktor umfasst, und wobei die Extrusionsdüse (27) zumindest teilweise aus einem induktiv erwärmbaren Material besteht und die Extrusionsdüse (27) für eine thermische und ggf. elektrische Isolation in einem diese umgebenden Isolationskörper (26) gehalten ist, der vorzugsweise aus einem keramischen Material besteht, **dadurch gekennzeichnet, dass** der Induktor, wie z.B. wenigstens eine Induktionsspule (29), im oder am Isolationskörper (26) angeordnet ist, dass ein Materialzuführkörper (24) vorgesehen ist, der einen mit dem Extrusionskanal (28) der Extrusionsdüse (27) fluchtenden Zuführkanal (25) aufweist und dass die Extrusionsdüse (27) lösbar mit dem Materialzuführkörper (24) verbunden ist, wobei die Extrusionsdüse (27) unter Vermittlung des Isolationskörpers (26) mit dem Materialzuführkörper (24) verbunden ist.

2. Extrusionskopf nach Anspruch 1, **dadurch gekennzeichnet, dass** der Isolationskörper (26) einen ringförmigen Querschnitt aufweist und ggf. axiale Durchbrechungen aufweist.

3. Extrusionskopf nach einem der Ansprüche 1 oder 2, **dadurch gekennzeichnet, dass** die Kanalwand des Extrusionskanals (28) der Extrusionsdüse (27) von wenigstens einer Materialschicht aus einem von dem Material des Düsenkörpers der Extrusionsdüse (27) verschiedenen Material gebildet ist.

4. Extrusionskopf nach Anspruch 3, **dadurch gekennzeichnet, dass** die wenigstens eine Materialschicht als Hülse ausgebildet ist, welche in dem Düsenkörper aufgenommen ist und den Extrusionskanal (28) begrenzt.

5. Extrusionskopf nach Anspruch 3 oder 4, **dadurch gekennzeichnet, dass** die Materialschicht aus dem induktiv erwärmbaren Material besteht.

6. Extrusionskopf nach Anspruch 3 oder 4, **dadurch gekennzeichnet, dass** die Materialschicht aus einem keramischen Material oder aus polykristallinem Diamant besteht.

7. Extrusionskopf nach Anspruch 3, 4 oder 6, **dadurch gekennzeichnet, dass** der Düsenkörper aus einem induktiv erwärmbaren Material besteht.

8. Modulares System für das schichtweise Aufbringen von Material zur generativen Fertigung eines Formkörpers, umfassend einen Extrusionskopf, insbesondere Druckkopf (6), nach einem der Ansprüche 1 bis 7, der eine auswechselbare erste Extrusionsdüse (27) aufweist, und weiters umfassend wenigstens eine zweite Extrusionsdüse (27), wobei die erste und die zweite Extrusionsdüse (27) jeweils einen Extrusionskanal (28) aufweisen, der einen sich in Austrittsrichtung des Materials verjüngenden Querschnitt aufweist, wobei der Extrusionskanal (28) der ersten und der zweiten Extrusionsdüse (27) eine voneinander verschiedene Geometrie aufweist.

9. Vorrichtung zur generativen Fertigung eines Formkörpers umfassend eine Bauplattform, wenigstens einen Extrusionskopf, insbesondere Druckkopf (6), nach einem der Ansprüche 1 bis 7 oder ein modulares System nach Anspruch 8 zum schichtweisen Aufbringen von Material auf die Bauplattform oder den auf der Bauplattform zumindest teilweise aufgebauten Formkörper, einen positionierbaren Träger für den wenigstens einen Extrusionskopf, ein Positioniersystem für den Träger und eine Zuführeinrichtung zum Zuführen von Material aus einem Materialvorrat zu dem wenigstens einen Extrusionskopf.

## Claims

1. Extrusion head, in particular printing head (6), for the layer-by-layer application of material for the generative production of a shaped body, comprising an extrusion nozzle (27) with an extrusion channel (28) and a heating device for melting the polymer material fed to the extrusion nozzle (27), wherein the heating device is designed as an inductive heater which comprises an inductor surrounding the extrusion nozzle (27), and wherein the extrusion nozzle (27) consists at least in part of an inductively heatable material and the extrusion nozzle (27), for thermal and, if necessary, electrical insulation, is supported an insulation body (26) surrounding it, which preferably consists of a ceramic material, **characterized in that** the inductor, such as at least one induction coil (29), is arranged in or on the insulating body (26), **in that** a material feed body (24) is provided which has a feed channel (25) aligned with the extrusion channel (28) of the extrusion nozzle (27), and **in that** the extrusion nozzle (27) is detachably connected to the material feed body (24), the extrusion nozzle (27) being connected to the material feed body (24) via the insulating body (26).

2. Extrusion head according to claim 1, **characterized in that** the insulating body (26) has an annular cross-section and optionally has axial openings.

3. Extrusion head according to any one of claims 1 or 2, **characterized in that** the channel wall of the extrusion channel (28) of the extrusion nozzle (27) is formed by at least one material layer of a material different from the material of the nozzle body of the extrusion nozzle (27).

4. Extrusion head according to claim 3, **characterized in that** the at least one material layer is formed as a sleeve which is received in the nozzle body and bounds the extrusion channel (28).

5. Extrusion head according to claim 3 or 4, **characterized in that** the material layer consists of the inductively heatable material.

6. Extrusion head according to claim 3 or 4, **characterized in that** the material layer consists of a ceramic material or of polycrystalline diamond.

7. Extrusion head according to claim 3, 4 or 6, **characterized in that** the nozzle body consists of an inductively heatable material.

8. Modular system for the layer-by-layer application of material for the generative production of a shaped body, comprising an extrusion head, in particular a printing head (6), according to any one of claims 1 to 7, which has an exchangeable first extrusion nozzle (27), and further comprising at least one second extrusion nozzle (27), wherein the first and the second extrusion nozzle (27) each comprise an extrusion channel (28) having a cross-section tapering in the discharge direction of the material, wherein the extrusion channel (28) of the first and the second extrusion nozzle (27) have a geometry different from each other.

9. Apparatus for the generative production of a shaped body comprising a building platform, at least one extrusion head, in particular a printing head (6), according to any one of claims 1 to 7 or a modular system according to claim 8 for the layer-by-layer application of material to the building platform or the shaped body at least partially built up on the building platform, a positionable carrier for the at least one extrusion head, a positioning system for the carrier and a feed device for feeding material from a material supply to the at least one extrusion head.

## Revendications

1. Tête d'extrusion, en particulier une tête d'impression (6), pour l'application couche par couche de matériau aux fins de la production générative d'un corps moulé, comprenant une buse d'extrusion (27) avec un canal d'extrusion (28) et un dispositif de chauffage pour la fusion du matériau polymère amené à la buse d'extrusion (27), le dispositif de chauffage étant conçu comme un chauffage par induction, qui comprend un inducteur entourant la buse d'extrusion (27), dans laquelle la buse d'extrusion (27) se compose au moins partiellement d'un matériau pouvant être chauffé par induction, et la buse d'extrusion (27), en vue d'isolation thermique et éventuellement électrique, est maintenue dans un corps isolant (26) qui l'entoure, et qui se compose de préférence d'un matériau céramique, **caractérisée en ce que** l'inducteur, tel que par exemple au moins une bobine d'induction (29), est disposée dans ou sur le corps isolant (26), **en ce qu'**un corps d'alimentation en matériau (24) est prévu, qui présente un canal d'alimentation (25) aligné avec le canal d'extrusion (28) de la buse d'extrusion (27), et **en ce que** la buse d'extrusion (27) est reliée de manière amovible au corps d'alimentation en matériau (24), la buse d'extrusion (27) étant reliée au corps d'alimentation en matériau (24) par l'intermédiaire du corps isolant (26).

2. Tête d'extrusion selon la revendication 1, **caractérisée en ce que** le corps isolant (26) a une section annulaire et éventuellement des ouvertures axiales.

3. Tête d'extrusion selon l'une des revendications 1 ou 2, **caractérisée en ce que** la paroi de canal du canal d'extrusion (28) de la buse d'extrusion (27) est formée par au moins une couche de matériau composée d'un matériau différent du matériau du corps de buse de la buse d'extrusion (27).

4. Tête d'extrusion selon la revendication 3, **caractérisée en ce que** l'au moins une couche de matériau est réalisée sous la forme d'un manchon qui est logé dans le corps de buse et délimite le canal d'extrusion (28).

5. Tête d'extrusion selon la revendication 3 ou 4, **caractérisée en ce que** la couche de matériau est constituée du matériau pouvant être chauffé par induction.

6. Tête d'extrusion selon la revendication 3 ou 4, **caractérisée en ce que** la couche de matériau est constituée d'un matériau céramique ou de diamant polycristallin.

7. Tête d'extrusion selon la revendication 3, 4 ou 6, **caractérisée en ce que** le corps de buse est constituée d'un matériau pouvant être chauffé par induction.

8. Système modulaire pour l'application couche par couche de matériau aux fins de la production générative d'un corps moulé, comprenant une tête d'extrusion, en particulier une tête d'impression (6), selon l'une des revendications 1 à 7, qui présente une première buse d'extrusion (27) interchangeable, et comprenant en outre au moins une deuxième buse d'extrusion (27), la première et la seconde buse d'extrusion (27) ayant chacune un canal d'extrusion (28) qui a une section transversale qui se rétrécit dans la direction de sortie du matériau, les canals d'extrusion (28) de la première et de la deuxième buse d'extrusion (27) ayant une géométrie différente l'un de l'autre.

9. Dispositif de production générative d'un corps moulé comprenant une plate-forme de construction, au moins une tête d'extrusion, en particulier une tête d'impression (6), selon l'une des revendications 1 à 7, ou un système modulaire selon la revendication 8, pour l'application couche par couche de matériau sur la plate-forme de construction ou sur le corps moulé qui est au moins partiellement construit sur la plate-forme de construction, un support positionnable pour l'au moins une tête d'extrusion, un système de positionnement pour le support et un dispositif d'alimentation pour amener le matériau à partir d'une alimentation en matériau à l'au moins une tête d'extrusion.
